(19) Europäisches Patentamt
European Patent Office
Office européen des brevets

(11) **EP 3 814 200 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **19748648.3**

(22) Anmeldetag: **24.06.2019**

(51) Internationale Patentklassifikation (IPC):
***G05D 1/00*** *(2024.01)*

(52) Gemeinsame Patentklassifikation (CPC):
**B60W 30/16; B60W 30/095; B60W 30/18163; B60W 40/04; B62D 15/0255; B62D 15/0265; G08G 1/167;** B60W 2050/065

(86) Internationale Anmeldenummer:
**PCT/DE2019/100582**

(87) Internationale Veröffentlichungsnummer:
**WO 2020/001700 (02.01.2020 Gazette 2020/01)**

(54) **VERFAHREN ZUR ERMITTLUNG EINER AKTUALISIERTEN TRAJEKTORIE FÜR EIN FAHRZEUG**

METHOD FOR DETERMINING AN UPDATED TRAJECTORY FOR A VEHICLE

PROCÉDÉ DE DÉTERMINATION D'UNE TRAJECTOIRE ACTUALISÉE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2018 DE 102018210510**

(43) Veröffentlichungstag der Anmeldung:
**05.05.2021 Patentblatt 2021/18**

(73) Patentinhaber: **Bayerische Motoren Werke Aktiengesellschaft**
**80809 München (DE)**

(72) Erfinder:
• **KNORRN, Robert**
**82041 Oberhaching (DE)**
• **FENDLER, Tamas**
**82152 Krailing (DE)**

(56) Entgegenhaltungen:
CN-A- 101 770 690    DE-A1- 102014 215 244
DE-A1- 102014 223 000    DE-A1- 102016 009 760
US-A1- 2013 218 467    US-B2- 9 279 691

**Beschreibung**

Die Erfindung betrifft ein Verfahren und eine entsprechende Vorrichtung zur Ermittlung einer Trajektorie für die Steuerung und/oder Regelung der Quer und/oder Längsführung eines Fahrzeugs während eines Fahrmanövers.

Fahrzeug (insbesondere Straßenkraftfahrzeuge) weisen verstärkt teil- oder hochautomatisierte Fahrfunktionen auf. Ein zentraler Aspekt einer teil- oder hochautomatisierten Fahrfunktion ist die Planung einer möglichst optimalen Trajektorie des Fahrzeugs, durch die Kollisionen mit anderen Verkehrsteilnehmern vermieden werden, und durch die ein möglichst hoher Fahrkomfort ermöglicht wird.

Beispielsweise beschreibt die DE 10 2014 223 000 A1 ein Verfahren zur Ermittlung einer Trajektorie für die Längs- und/oder Querführung eines Fahrzeugs. Das Verfahren umfasst das Ermitteln von Werten von ein oder mehreren Trajektorien-Parametern. Dabei zeigen die ein oder mehreren Trajektorien-Parameter eine Dynamik und/oder eine Zielgenauigkeit der zu ermittelnden Trajektorie an.

Die DE 10 2016 009 760 A1 beschreibt ein Steuerungssystem, das eingerichtet ist, ausgehend von einem momentanen Ort eines eigenen Kraftfahrzeugs, eine Schar mit vorgegebener Anzahl sich hinsichtlich ihrer Länge und/oder ihrem Verlauf unterscheidender Trajektorien für mögliche Pfade des eigenen Kraftfahrzeugs zu ermitteln, wobei der Verlauf benachbarter Trajektorien sich um eine vorgegebene Differenz möglicher unterschiedlicher Lenkwinkel des eigenen Kraftfahrzeugs unterscheidet, und die vorgegebene Anzahl der Trajektorien, die Länge und/oder den Verlauf der Trajektorien abhängig von einer Fahrsituation des eigenen Kraftfahrzeugs zu variieren, und wenigstens ein Signal zu erzeugen, das einen Fahrer des eigenen Kraftfahrzeugs dabei unterstützt, das eigene Kraftfahrzeug zu steuern, um das eigene Kraftfahrzeug entlang einer ausgewählten dieser Trajektorien zu führen, oder wenigstens einen zugehörigen Steuerbefehl zu erzeugen, der das eigene Kraftfahrzeug dazu veranlasst, einer ausgewählten dieser Trajektorien zu folgen.

Die DE 10 2014 215 244 A1 beschreibt ein Verfahren und eine entsprechende Vorrichtung zur Ermittlung einer Soll-Trajektorie für die Steuerung und/oder Regelung der Quer-/Längsführung eines Fahrzeugs. Das Verfahren umfasst das Detektieren von ein oder mehreren Objekten in einer Umgebung des Fahrzeugs auf Basis von Umfelddaten. Desweiteren umfasst das Verfahren das Durchführen einer globalen Planung, um in Abhängigkeit von den detektierten Objekten eine Vielzahl von potentiell möglichen Fahrmanövern zu ermitteln, sowie das Auswählen eines Fahrmanövers aus der Vielzahl von potentiell möglichen Fahrmanövern. Außerdem umfasst das Verfahren das Durchführen einer lokalen Planung, um für das ausgewählte Fahrmanöver eine Soll-Trajektorie für die Längs- und/oder Querführung des Fahrzeugs zu ermitteln.

Die wiederholte Ermittlung einer Trajektorie (z.B. einer Ausweichtrajektorie) während der Durchführung eines Fahrmanövers ist mit einem hohen Rechenaufwand verbunden, der von Steuergeräten in einem Fahrzeug typischerweise nur begrenzt erbracht werden kann.

Das vorliegende Dokument befasst sich mit der technischen Aufgabe, eine wiederholte Ermittlung einer optimalen Trajektorie für ein Fahrzeug während eines Fahrmanövers mit einem reduzierten Rechenaufwand zu ermöglichen.

Die Aufgabe wird durch jeweils durch die unabhängigen Ansprüche gelöst. Vorteilhafte Ausführungsformen werden u.a. in den abhängigen Ansprüchen beschrieben.

Gemäß einem Aspekt wird ein Verfahren zur Ermittlung einer aktualisierten Trajektorie an einem bestimmten Zeitpunkt (z.B. an dem Zeitpunkt (n + 1) einer Sequenz von (ggf. äquidistanten) Zeitpunkten) beschrieben. Die Trajektorie kann für die (automatisierte) Längs- und/oder Querführung eines Fahrzeugs, insbesondere eines Straßenkraftfahrzeugs, verwendet werden. Insbesondere kann eine aktualisierte Trajektorie dazu verwendet werden, eine Lenkvorgabe für eine Hilfskraftlenkung des Fahrzeugs und/oder eine Verzögerungsvorgabe für eine Bremsanlage des Fahrzeugs und/oder eine Beschleunigungsvorgabe für einen Antrieb des Fahrzeugs zu bestimmen. Die Längs- und/oder Querführung eines Fahrzeugs kann somit in Abhängigkeit einer (kontinuierlich aktualisierten) Trajektorie erfolgen.

Eine Trajektorie zeigt einen zeitlichen Verlauf bzw. eine zeitliche Sequenz von Werten von ein oder mehreren Zustandsgrößen des Fahrzeugs ausgehend von einem Anfangszustand bis zu einem Endzustand an. Beispielhafte Zustandsgrößen sind eine Position $x_1(k)$ des Fahrzeugs, eine Geschwindigkeit $\dot{x}_1(k)$ des Fahrzeugs, eine Beschleuni-gung $\ddot{x}_1(k)$ des Fahrzeugs und/oder ein Ruck $x_1^{(3)}(k)$ des Fahrzeugs.

Das Verfahren umfasst das Ermitteln von Nahbereich-Trajektorienkandidaten in einer direkten Umgebung bzw. in einem Nahbereich einer an einem vorhergehenden Zeitpunkt geplanten Trajektorie. Das Verfahren kann wiederholt für eine Sequenz von Zeitpunkten, insbesondere für eine Sequenz von äquidistanten Zeitpunkten, durchgeführt werden. Der vorhergehende Zeitpunkt n kann dabei der direkt vor dem bestimmten Zeitpunkt $n + 1$ liegende Zeitpunkt der Sequenz von Zeitpunkten sein. An jedem der Zeitpunkte kann eine an einem vorhergehenden Zeitpunkt ermittelte Trajektorie aktualisiert werden. Dabei kann sich der Zustand des Fahrzeugs entlang der Sequenz von Zeitpunkten verändern. Dabei kann die Zustandsänderung des Fahrzeugs zumindest teilweise in Abhängigkeit von der wiederholt ermittelten bzw. aktualisierten Trajektorie bewirkt werden.

Die Nahbereich-Trajektorienkandidaten können mit einer relativ feinen Werteauflösung der ein oder mehreren Zustandsgrößen ermittelt werden. Es kann somit in einer direkten Umgebung der an dem vorhergehenden Zeitschritt ermittelten Trajektorie mit relativ hoher Genauigkeit nach einer aktualisierten Version der Trajektorie gesucht werden (wobei die aktualisierte Trajektorie von einem aktualisierten Anfangszustand ausgeht).

Die direkte Umgebung bzw. der Nahbereich stellt dabei typischerweise einen begrenzten Teilraum des Gesamt-Lösungsraums für mögliche Trajektorienkandidaten dar. Insbesondere kann die aktualisierte Trajektorie Teil eines Gesamt-Lösungsraums von möglichen Trajektorienkandidaten sein. Die direkte Umgebung der an dem vorhergehenden Zeitpunkt geplanten Trajektorie stellt typischerweise einen Teil-Lösungsraum von Nahbereich-Trajektorienkandidaten aus dem Gesamt-Lösungsraum von möglichen Trajektorienkandidaten dar.

Die direkte Umgebung der an dem vorhergehenden Zeitpunkt geplanten Trajektorie kann derart sein, dass der Teil-Lösungsraum von Nahbereich-Trajektorienkandidaten 20%, 10% oder weniger des Gesamt-Lösungsraums von Trajektorienkandidaten umfasst. Es kann somit in effizienter Weise eine örtliche begrenzte, detaillierte Suche nach einer aktualisierten Trajektorie in der direkten Umgebung der zuvor ermittelten Trajektorie erfolgen. So kann der relativ wahrscheinliche Fall abgedeckt werden, dass sich die aktualisierte Trajektorie in der direkten Umgebung der zuvor ermittelten Trajektorie befindet.

Außerdem umfasst das Verfahren das Ermitteln von zumindest einem (typischerweise von mehreren) Fernbereich-Trajektorienkandidaten außerhalb der direkten Umgebung der an dem vorhergehenden Zeitpunkt geplanten Trajektorie. Die ein oder mehreren Fernbereich-Trajektorienkandidaten können somit aus dem Teil des Gesamt-Lösungsraums entnommen werden, der nicht Teil des Teil-Lösungsraums von Nahbereich-Trajektorienkandidaten ist.

Der zumindest eine Fernbereich-Trajektorienkandidat kann mit einer relativ groben Werteauflösung der ein oder mehreren Zustandsgrößen ermittelt werden. Insbesondere kann die Werteauflösung für das Ermitteln des Fernbereich-Trajektorienkandidaten 2, 3, 4, 5, 10 mal oder mehr gröber als die Werteauflösung für das Ermitteln der Nahbereich-Trajektorienkandidaten sein. Es können somit in effizienter aber in relativ ungenauer Weise ein oder mehrere Fernbereich-Trajektorienkandidaten für die zu ermittelnde aktualisierte Trajektorie ermittelt werden. So kann der relativ unwahrscheinliche Fall berücksichtigt werden, dass sich die aktualisierte Trajektorie nicht in der direkten Umgebung der zuvor ermittelten Trajektorie befindet (z.B. aufgrund einer kurzfristigen Änderung der Fahrsituation in der Umgebung des Fahrzeugs).

Das Verfahren umfasst ferner das Ermitteln der aktualisierten Trajektorie an dem bestimmten Zeitpunkt auf Basis der ermittelten Nahbereich-Trajektorienkandidaten und auf Basis der ein oder mehreren ermittelten Fernbereich-Trajektorienkandidaten. Zu diesem Zweck kann ein Trajektorienkandidat als aktualisierte Trajektorie aus den ermittelten Nahbereich-Trajektorienkandidaten und den ermittelten ein oder mehreren Fernbereich-Trajektorienkandidaten ausgewählt werden. Die Auswahl kann dabei derart erfolgen, dass ein oder mehrere Nebenbedingungen in Bezug auf zumindest ein Hindernis in einem Umfeld des Fahrzeugs erfüllt werden (z.B. um eine kollisionsfreie aktualisierte Trajektorie zu ermitteln). Alternativ oder ergänzend kann die Auswahl derart erfolgen, dass der Wert eines Gütefunktionals verbessert, insbesondere optimiert, wird. Dabei kann der Wert des Gütefunktionals für einen Trajektorienkandidaten z.B. von dem Fahrkomfort des Trajektorienkandidaten bei der Umsetzung durch das Fahrzeug abhängen.

Das Verfahren ermöglicht somit eine effiziente und präzise Aktualisierung einer Trajektorie für die (automatisierte) Quer- und/oder Längsführung eines Fahrzeugs. Die Aktualisierung kann mit einer bestimmten Frequenz (z.B. 10Hz, 20Hz, 50Hz oder mehr) erfolgen, z.B. während der Ausführung eines automatisierten Fahrmanövers. Dabei wird bei der Aktualisierung die Tatsache ausgenutzt, dass ein aktualisierte Trajektorie mit einer relativ hohen Wahrscheinlichkeit in der unmittelbaren Umgebung der zuvor ermittelten Trajektorie liegt. In der direkten Umgebung der zuvor ermittelten Trajektorie erfolgt daher die Ermittlung von präzisen Trajektorienkandidaten.

Um dennoch den relativ unwahrscheinlichen Fall abzudecken, dass die aktualisierte Trajektorie nicht in der direkten Umgebung der zuvor ermittelten Trajektorie liegt, werden außerhalb der direkten Umgebung mit einer relativ niedrigen Genauigkeit ein oder mehrere Trajektorienkandidaten ermittelt. Falls einer dieser Fernbereich-Trajektorienkandidaten ausgewählt werden sollte, so erfolgt direkt bei der nächsten Aktualisierung der Trajektorie (d.h. direkt bei dem folgenden Zeitschritt) eine präzise Ermittlung der Trajektorie (innerhalb der direkten Umgebung der ermittelten Trajektorie).

Die Werteauflösung einer Zustandsgröße beschreibt z.B. wie fein die möglichen Werte einer Zustandsgröße bei der Ermittlung von Trajektorienkandidaten gerastert werden. Die Werteauflösung kann die (gleichmäßige) Rasterweite zwischen unterschiedlichen Rasterpunkten einer Rasterung der möglichen Werte einer Zustandsgröße sein.

Das Verfahren kann umfassen, das Ermitteln eines Abstandswertes eines Abstandsmaßes zwischen einem Endzustand für die aktualisierte Trajektorie und einem Endzustand für die (zuvor ermittelte) Trajektorie. Der Endzustand kann z.B. von einer Fahrfunktion und/oder von einem Fahrerassistenzsystem des Fahrzeugs vorgegeben werden. Typischerweise erfolgt dabei keine wesentliche Änderung eines gewünschten Endzustands. Ggf. kann es jedoch zu einer wesentlichen Änderung des gewünschten Endzustands kommen (z.B. bei einem Abbruch eines Fahrmanövers).

Das Ermitteln der Nahbereich-Trajektorienkandidaten und/oder das Ermitteln von zumindest einem Fernbereich-Trajektorienkandidaten können in Abhängigkeit von dem Abstandswert erfolgen.

Insbesondere können das Ermitteln von Nahbereich-Trajektorienkandidaten und das Ermitteln von zumindest einem Fernbereich-Trajektorienkandidaten mit unterschiedlich feinen Werteauflösungen nicht erfolgen, wenn der Abstandswert größer als ein Abstands-Schwellenwert ist, und/oder nur dann erfolgen, wenn der Abstandswert kleiner als der Abstands-Schwellenwert ist. So kann z.B. bei einem Abbruch eines Fahrmanövers ein effizientes Umschalten auf einen neuen Endzustand für eine neu zu planende Trajektorie bewirkt werden.

Alternativ oder ergänzend kann die direkte Umgebung der an dem vorhergehenden Zeitpunkt geplanten Trajektorie, insbesondere die Größe der direkten Umgebung bzw. der Anteil der möglichen Trajektorienkandidaten innerhalb der direkten Umgebung, von dem Abstandswert abhängen. Dabei können die Umgebung, insbesondere die Größe der Umgebung und/oder der Anteil der möglichen Trajektorienkandidaten innerhalb der direkten Umgebung, mit steigendem Abstandswert vergrößert werden. So kann die Trajektorienplanung in zuverlässiger und in flexibler Weise an sich ändernde Zielvorgaben angepasst werden.

Das Verfahren kann umfassen, das Ermitteln eines Toleranzbereichs um einen vorgegebenen Endzustand der aktualisierten Trajektorie herum. Mit anderen Worten, es können Toleranzen bei der Planung der Endwerte von ein oder mehreren Zustandsgrößen zugelassen werden. So kann der Gesamt-Lösungsraum von möglichen Trajektorienkandidaten vergrößert werden, was typischerweise die Güte einer ermittelten Trajektorie erhöht (in Bezug auf das für die Trajektorienplanung zugrundliegende Gütefunktional). Die Betrachtung von Toleranzbereichen wird dabei aufgrund des reduzierten Rechenaufwands des beschriebenen Verfahrens möglich.

Die Nahbereich-Trajektorienkandidaten und/oder die ein oder mehreren Fernbereich-Trajektorienkandidaten können dann unter Berücksichtigung des Toleranzbereichs um den vorgegebenen Endzustand ermittelt werden. So kann die Güte einer aktualisierten Trajektorie erhöht werden.

Das Ermitteln eines Trajektorienkandidaten kann umfassen, das Ermitteln des Anfangszustands der aktualisierten Trajektorie, wobei der Anfangszustand Anfangswerte für ein oder mehrere Zustandsgrößen des Fahrzeugs umfasst. Der Anfangszustand kann z.B. auf Basis von Sensordaten von ein oder mehreren Sensoren des Fahrzeugs ermittelt werden.

Ferner kann der (gewünschte oder vorgegebene) Endzustand der aktualisierten Trajektorie ermittelt werden, wobei der Endzustand Endwerte für ein oder mehrere der Zustandsgrößen des Fahrzeugs umfasst. Es kann dann als Trajektorienkandidat eine zeitliche Sequenz von Werten der ein oder mehreren Zustandsgrößen ermittelt werden, wobei die zeitliche Sequenz von Werten der ein oder mehreren Zustandsgrößen den Anfangszustand in den Endzustand überführt. Die zeitliche Sequenz von Werten der ein oder mehreren Zustandsgrößen kann dabei in Abhängigkeit von einem Zustandsmodell des Fahrzeugs ermittelt werden. So können Trajektorienkandidaten ermittelt werden, die in zuverlässiger Weise durch ein Fahrzeug umgesetzt bzw. abgefahren werden können.

Gemäß einem weiteren Aspekt wird ein Verfahren zur Ermittlung einer aktualisierten Trajektorie an einem bestimmten Zeitpunkt (z.B. dem Zeitpunkt $n + 1$) für die Längs- und/oder Querführung eines Fahrzeugs beschrieben. Die in diesem Dokument beschriebenen Aspekte sind auch auf dieses Verfahren anwendbar. Eine Trajektorie zeigt dabei einen zeitlichen Verlauf von ein oder mehreren Zustandsgrößen des Fahrzeugs von einem Anfangszustand bis zu einem Endzustand an.

Das Verfahren umfasst das Ermitteln von Trajektorienkandidaten in einer bestimmten Umgebung einer an einem vorhergehenden Zeitpunkt (z.B. an dem Zeitpunkt $n$) ermittelten Trajektorie. Dabei wird die Werteauflösung der ein oder mehreren Zustandsgrößen beim Ermitteln von Trajektorienkandidaten mit dem Abstand zu der an dem vorhergehenden Zeitpunkt ermittelten Trajektorie reduziert (z.B. in stetiger Weise). Ferner umfasst das Verfahren das Ermitteln der aktualisierten Trajektorie an dem bestimmten Zeitpunkt auf Basis der ermittelten Trajektorienkandidaten.

Eine Trajektorie kann die Werte von ein oder mehreren Zustandsgrößen an einer Sequenz von Zeitpunkten umfassen (ausgehend von einem ersten Zeitpunkt, bei dem der Anfangszustand vorliegt, bis zu einem letzten Zeitpunkt, bei dem der Endzustand vorliegt). Die Zeitpunkte können einen Abstand von 100ms, 50ms, 20ms oder weniger zueinander aufweisen. Zur Ermittlung eines Abstands zwischen zwei Trajektorien kann für jede Zustandsgröße und für jeden Zeitpunkt der Trajektorien ein Abstandswert (z.B. ein quadratischer oder ein absoluter Abstand) ermittelt werden. Somit kann für jede Zustandsgröße eine Sequenz von Abstandswerten ermittelt werden, und auf Basis der Sequenz von Abstandswerten kann z.B. ein mittlerer Abstandswert für diese Zustandsgröße ermittelt werden. Der Abstand zwischen den Trajektorien kann dann als Summe oder als (ggf. gewichteter) Mittelwert der (mittleren) Abstandswerte der Zustandsgrößen der Trajektorien ermittelt werden. Ein steigender Abstand zwischen zwei Trajektorien zeigt somit einen steigenden Abstand der Werte der Zustandsgrößen der zwei Trajektorien an.

Gemäß einem weiteren Aspekt wird eine Vorrichtung beschrieben, die eingerichtet ist, eines der in diesem Dokument beschriebenen Verfahren auszuführen.

Gemäß einem weiteren Aspekt wird ein Straßenkraftfahrzeug (insbesondere ein Personenkraftwagen oder ein Lastkraftwagen oder ein Bus) beschrieben, das die in diesem Dokument beschriebene Vorrichtung umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch eines der in diesem Dokument beschriebenen Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch eines der in diesem Dokument beschriebenen Verfahren auszuführen.

Im Weiteren wird die Erfindung anhand von Ausführungsbeispielen näher beschrieben. Dabei zeigen

Figur 1 eine beispielhafte Verkehrssituation;
Figur 2 ein Ablaufdiagramm eines beispielhaften Verfahrens zur Ermittlung einer Trajektorie bzw. eines Trajektorienkandidaten;
Figur 3 eine beispielhafte Transformation in ein Koordinatensystem relativ zu einer Referenzlinie eines Fahrzeugs;
Figur 4a einen beispielhaften Nahbereich einer geplanten Trajektorie;
Figur 4b einen beispielhaften Toleranzbereich für einen Endzustand einer Trajektorie; und
Figur 5 ein Ablaufdiagramm eines beispielhaften Verfahrens zur Ermittlung einer aktualisierten Trajektorie.

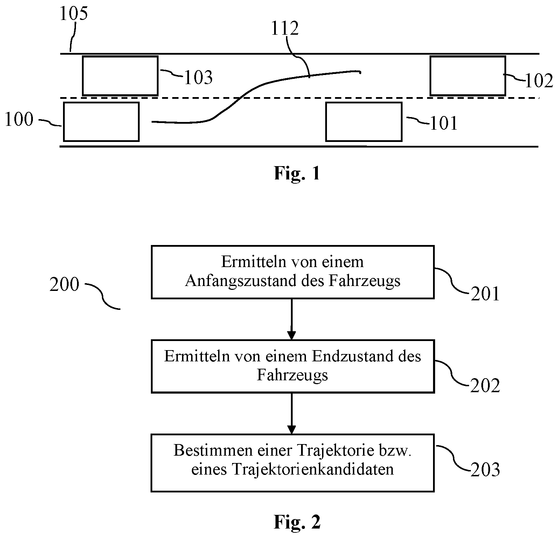

Wie eingangs dargelegt, befasst sich das vorliegende Dokument mit der technischen Aufgabe, in effizienter Weise eine sichere Längs- und/oder Quer-Trajektorie für ein Fahrzeug (welches auch als Ego-Fahrzeug bezeichnet wird) zu ermitteln bzw. zu aktualisieren. In diesem Zusammenhang zeigt Fig. 1 eine beispielhafte Verkehrssituation. Das Ego-Fahrzeug 100 fährt auf einer mehrspurigen Fahrbahn 105. Ein Fahrzeug 101 auf der gleichen Fahrspur der Fahrbahn 101 vor dem Ego-Fahrzeug 100 (d.h. ein Fahrzeug 101 auf der Ego-Fahrspur) kann ggf. eine relativ geringe Fahrgeschwindigkeit aufweisen. Das Ego-Fahrzeug 100 hat dann z.B. die Möglichkeit ein Überholmanöver durchzuführen und entlang einer Trajektorie 112 die Fahrspur zu wechseln, um das Fahrzeug 101 zu überholen. Dabei ist eine Kollision mit anderen Fahrzeugen 102, 103 zu vermeiden.

Zur Durchführung des in Fig. 1 dargestellten Manövers kann eine Steuereinheit bzw. eine Vorrichtung des Ego-Fahrzeugs 100 eine Trajektorie 112 ermitteln und periodisch aktualisieren, die ein oder mehrere Rand- bzw. Nebenbedingungen erfüllt. Bei der Ermittlung einer Trajektorie 112 können u.a. fahrdynamische Aspekte berücksichtigt werden. Insbesondere kann in Abhängigkeit von ein oder mehreren Fahrzeugparametern und/oder in Abhängigkeit von einer aktuellen Fahrsituation eine Trajektorie 112 ermittelt werden, die mit dem Fahrzeug 100 realistisch gefahren werden kann. Dabei kann eine vom Fahrzeug 100 umsetzbare Krümmung berücksichtigt werden. Weitere Beispiele für Fahrzeugparameter, die berücksichtigt werden können, sind eine (bei der aktuellen Fahrsituation umsetzbare) Quer- und/oder Längsbeschleunigung oder Verzögerung des Fahrzeugs 100.

Des Weiteren wird eine Trajektorie 112 typischerweise derart ermittelt, dass mit der Trajektorie 112 eine Kollision mit den detektierten Objekten bzw. Hindernissen 101, 102, 103 in der Umgebung des Ego-Fahrzeugs 100 vermieden werden kann. Die so ermittelte Trajektorie 112 kann dann an ein oder mehrere Regler für die Querführung und/oder die Längsführung des Fahrzeugs 100 übergeben werden, und von den ein oder mehreren Reglern für die Querführung und/oder die Längsführung des Fahrzeugs 100 verwendet werden.

Die Ermittlung einer Trajektorie 112 erfolgt bevorzugt in einem gekrümmten Koordinatensystem, relativ zu einem Fahrbahnverlauf. Das in diesem Dokument beschriebene Verfahren zur Ermittlung bzw. zur Aktualisierung einer Trajektorie kann daher den Schritt umfassen, Zustandsdaten bzw. Werte von Zustandsgrößen des Fahrzeugs 100 (wie z.B. die Position des Fahrzeugs 100, einen Gierwinkel des Fahrzeugs 100 und/oder einen Lenkwinkel des Fahrzeugs 100) aus einem kartesischen Koordinatensystem in ein (gekrümmtes) Frenet-Koordinatensystem zu transformieren.

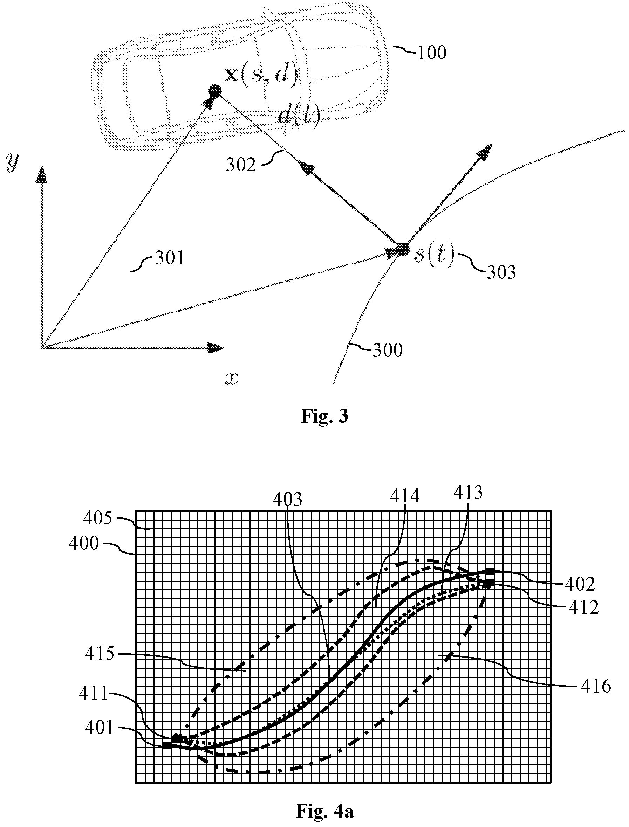

Die Entkrümmung des Fahrbahnverlaufs (durch ein gekrümmtes Koordinatensystem) ist beispielhaft in Fig. 3 dargestellt. Für die Entkrümmung werden Messsignale bzgl. des Zustands des Fahrzeugs 100 in ein Fahrspurkoordinatensystem transformiert. Die Trajektorienplanung selbst findet damit nicht in einem kartesischen Koordinatensystem 301 statt, sondern in einem Frenet-Koordinatensystem. Das Frenet-Koordinatensystem wird bezüglich einer Referenzkurve 300 (z.B. der Fahrspurmitte eines Fahrbahnverlaufs) beschrieben. Die Fahrzeugposition wird damit durch die Variablen $s(t)$ 303 in Längsrichtung und $d(t)$ 302 in Querrichtung beschrieben. $\dot{s}(t)$ und $\dot{d}(t)$ beschreiben die Längs- bzw. Quergeschwindigkeit und $\ddot{s}(t)$ und $\ddot{d}(t)$ beschreiben die Längs- bzw. Querbeschleunigung.

Sowohl die Fahrzeugeigenbewegung als auch die zu berücksichtigenden Verkehrsteilnehmer bzw. Objekte 101, 102, 103 können im Frenet-Koordinatensystem berücksichtigt werden. Anschaulich entspricht diese Transformation der Entkrümmung des Koordinatensystems 301 und erlaubt so die getrennte Optimierung der Längs- und Querbewegung des Fahrzeugs 100. Nach Ermittlung einer Trajektorie 112 (d.h. nach Ermittlung einer zeitlichen Sequenz von Werten der Zustandsgrößen des Fahrzeugs 100), können die ermittelten Werte der Zustandsgrößen wieder in das kartesische Koordinatensystem 301 rücktransformiert werden, bevor sie zur Regelung der Längs- und Querführung des Fahrzeugs 100 verwendet werden.

Die Quer- und Längsbewegung eines Fahrzeugs 100 lässt sich als Optimalsteuerproblem mit Ausgang $s(t) = x_1(t)$ (im Falle der Längsplanung) bzw. $d(t) = x_1(t)$ (im Falle der Querplanung) eines Integratorsystems (d.h. eines Modells der Dynamik eines Fahrzeugs 100) beschreiben. Dabei ist $x_1(t)$ eine erste Zustandsgröße des Fahrzeugs 100, welche die Position des Fahrzeugs 100 (in Längsrichtung bzw. in Querrichtung) beschreibt. Als Eingang des Integratorsystems können der Ruck $x_1^{(3)}(t)$ (d.h. die 3$^{te}$ Ableitung der Zustandsgröße $x_1(t)$) und/oder die Ableitung des Rucks $x_1^{(4)}(t)$ (d.h. die 4$^{te}$ Ableitung der Zustandsgröße $x_1(t)$) definiert werden.

Ein beispielhaftes Integratorsystem bzw. Zustandsmodell eines Fahrzeugs 100 kann wie folgt definiert werden:

$$
\dot{\mathbf{x}} = \begin{bmatrix} 0 & 1 & 0 & 0 \\ 0 & 0 & 1 & 0 \\ 0 & 0 & 0 & 1 \\ 0 & 0 & 0 & 0 \end{bmatrix} \mathbf{x} + \begin{bmatrix} 0 \\ 0 \\ 0 \\ 1 \end{bmatrix} u
$$

wobei die Eingangsgröße $u$ der Ableitung des Rucks $x_1^{(4)}(t)$ entspricht. Der Zustand eines Fahrzeugs 100 zu einem bestimmten Zeitpunkt t kann durch den Zustandsvektor $\mathbf{x}^T = [x_1, x_2, x_3, x_4]$ beschrieben werden, wobei $x_2(t) = \dot{x}_1(t)$, $x_3(t) = \dot{x}_2(t)$ und $x_4(t) = \dot{x}_3(t)$ ist.

Es kann nun eine Trajektorie, d.h. eine zeitliche Abfolge von Zuständen $x(t)$ bzw. im zeitdiskreten Bereich $x(k)$, mit $k = 1, ...., N_{lon}$, wobei $N_{lon}$ der Planungshorizont ist, ermittelt werden. Der Planungshorizont kann z.B. 5 Sekunden, 10 Sekunden oder mehr sein. Die einzelnen Zeitpunkte können einen Abstands von 100ms, 50ms, 20ms oder weniger zueinander aufweisen. Im Rahmen der Planung einer Trajektorie kann die Zustands-Abfolge $x(k)$ ermittelt werden, durch die eine Kosten- bzw. Gütefunktion reduziert, insbesondere minimiert, bzw. optimiert wird. Dabei kann in der Kostenfunktion vorgegeben werden, dass das Fahrzeug 100 am Ende des Planungshorizonts eine bestimmte Zielposition aufweist. Alternativ oder ergänzend kann vorgegeben werden, dass die Zustands-Abfolge ein oder mehrere Komfortkriterien (z.B. in Bezug auf den Ruck) erfüllt.

Zur Berechnung einer Quer-Trajektorie kann als gewünschter Endpunkt einer Trajektorie ein Zielbereich $d_{ziel}$ vorgegeben werden, der z.B. einen Bereich auf einer benachbarten Fahrspur anzeigt (wie in Fig. 1 dargestellt). Dieser Zielbereich kann z.B. als gewünschte Endposition des Endzustands $x(t_f)$ bzw. $x(N_{lon})$ festgelegt werden, ggf. mit $x_1(t_f) = x_1(N_{lon}) = d_{ziel}$. Dabei können sich der Planungshorizont für die Planung einer Quer-Trajektorie und der Planungshorizont für die Planung einer Längs-Trajektorie voneinander unterscheiden. Typischerweise ist der Planungshorizont für eine Quer-Trajektorie kürzer als für eine Längs-Trajektorie (z.B. 6s vs. 10s).

Als Quer-Auswahlmaß oder als Quer-Gütemaß für die Ermittlung einer Trajektorie für die Querführung des Fahrzeugs 100 kann z.B. folgende Funktion verwendet (insbesondere reduziert bzw. minimiert) werden:

$$
J_{quer} = \frac{1}{2} \int_0^{t_f} \left( d^{(4)}(t) \right)^2 dt + k_{q1} \left( d_{ziel} - d(t_f) \right)^2 + k_{q2} t_f
$$

Dabei bewertet der erste Ausdruck die Entwicklung der Ableitung des Rucks entlang der Trajektorie 112 (und damit den Komfort). Der zweite Ausdruck bewertet die Abweichung der Endposition $d(t_f)$ von der Zielposition $d_{ziel}$. Des Weiteren bewertet der dritte Ausdruck die zeitliche Länge der Trajektorie 112. Über die Gewichtungsfaktoren $k_{q1}$ und $k_{q2}$ kann die Ausprägung der Trajektorie 112 beeinflusst werden.

Die Längsplanung kann in ähnlicher Weise erfolgen. Für die Längsplanung kann z.B. folgendes Längs-Auswahlmaß bzw. Längs-Gütefunktional verwendet (insbesondere reduziert bzw. minimiert) werden

$$
J_{längs} = \frac{1}{2} \int_0^{t_f} \left( s^{(4)}(t) \right)^2 dt + k_{l1} \left( s_{ziel} - s(t_f) \right)^2 + k_{l2} t_f,
$$

insbesondere wenn eine bestimmte Zielposition $s_{ziel}$ erreicht werden soll. Alternativ kann das folgende Längs-Auswahlmaß bzw. Längs-Gütefunktional verwendet werden

$$
J_{längs} = \frac{1}{2} \int_0^{t_f} \left( s^{(4)}(t) \right)^2 dt + k_{l1} \left( \dot{s}_{ziel} - \dot{s}(t_f) \right)^2 + k_{l2} t_f,
$$

insbesondere wenn eine bestimmte Zielgeschwindigkeit $\dot{s}_{ziel}$ erreicht werden soll.

Es kann somit eine (Längs- und/oder Quer-) Trajektorie ermittelt werden, wobei eine Trajektorie den Zustand $x$ des Fahrzeugs 100, insbesondere die Position $s(k)$ des Fahrzeugs 100, an einer Vielzahl von Abtastzeitpunkten $k$, mit $k = 1, ...., N_{lon}$, anzeigt, wobei $N_{lon}$ der Planungshorizont ist. Es ist dann zu überprüfen, welcher der Vielzahl von Trajektorien ein oder mehrere Nebenbedingungen in Bezug auf Hindernisse, insbesondere in Bezug auf andere Fahrzeuge 101, 102, 103, erfüllt. Insbesondere können eine Vielzahl von ermittelten Trajektorienkandidaten gemäß einem steigenden Wert des jeweiligen Gütefunktionals sortiert sein. Es kann der Trajektorienkandidaten aus der Vielzahl von Trajektorienkandidaten als Trajektorie 112 ausgewählt werden, der die ein oder mehreren Nebenbedingungen in Bezug auf Hindernisse 101, 102, 103 erfüllt und dabei einen möglichst niedrigen bzw. optimalen Wert des Gütefunktionals aufweist.

Es kann somit an einem bestimmten Zeitpunkt n eine optimale Trajektorie $x_{opt}(k)$, mit $k = 1, ... , N_{lon}$, ermittelt werden. Die optimale Trajektorie kann an dem bestimmten Zeitpunkt zur automatisierten Längs- und/oder Querführung des Fahrzeugs 100 verwendet werden.

Der Prozess der Ermittlung einer jeweils optimalen Trajektorie, d.h. insbesondere das in Fig. 2 dargestellte Verfahren 200, kann für eine Sequenz von Zeitpunkten n wiederholt werden. Dabei kann an jedem Zeitpunkt n

- der jeweils aktuelle Anfangszustand x(0) bestimmt werden (Schritt 201);
- der gewünschte Endzustand bzw. Zielpunkt $x(N_{lon})$ vorgegeben werden (Schritt 202); und
- mittels des oben beschriebenen Optimierungsverfahrens eine optimale Trajektorie $x_{opt}(k)$, mit $k = 1, ... , N_{lon}$, ermittelt werden (Schritt 203).

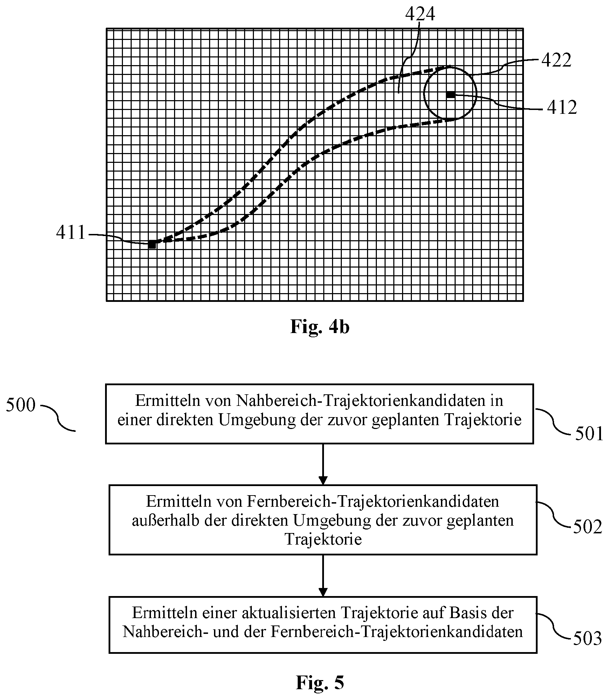

Fig. 4 zeigt eine beispielhafte geplante bzw. optimale Trajektorie $x_{opt}(k)$ 403 zwischen einem Anfangszustand x(0) 401 und einem Endzustand $x(N_{lon})$ 402. Die Trajektorie 403 ist in einem Rasternetz 400 dargestellt, wobei das Rasternetz 400 als Rasterbereiche 405 die möglichen Werte der unterschiedlichen Zustandsgrößen $x_1, x_2, x_3, x_4$ anzeigt. Die geplante Trajektorie $x_{opt}(k)$ 403 kann mittels des Verfahrens 200 an einem bestimmten Zeitpunkt $n$ ermittelt worden sein.

Des Weiteren zeigt Fig. 4 einen aktualisierten Anfangszustand $x(0)$ 411 des Fahrzeugs 100 an einem nachfolgenden Zeitpunkt $n + 1$. Das Fahrzeug 100 kann in Abhängigkeit von der für den Zeitpunkt $n$ geplanten Trajektorie $x_{opt}(k)$ 403 zumindest teilweise automatisiert zu dem aktualisierten Anfangszustand $x(0)$ 411 geführt worden sein.

Des Weiteren kann ein aktualisierter Endzustand $x(N_{lon})$ 412 für den nachfolgenden Zeitpunkt $n + 1$ vorgegeben werden, z.B. von dem Fahrerassistenzsystem, für das die Trajektorie 403, 413 ermittelt werden soll. Beispielsweise kann durch einen Spurwechselassistenten vorgegeben werden, dass weiterhin ein Spurwechsel durchgeführt werden soll. Der aktualisierte Endzustand $x(N_{lon})$ 412 für den nachfolgenden Zeitpunkt $n + 1$ kann dabei mit dem Endzustand $x(N_{lon})$ 402 für den Zeitpunkt $n$ übereinstimmen, bzw. in unmittelbarer Nähe dazu liegen.

Es kann davon ausgegangen werden, dass sich die zu planende bzw. die aktualisierte Trajektorie 413 für den nachfolgenden Zeitpunkt $n + 1$ in unmittelbarer Nähe zu der bereits geplanten Trajektorie 403 für den Zeitpunkt $n$ befindet, insbesondere dann, wenn sich die Zielpunktvorgaben (d.h. der zu erreichende Endzustand $x(N_{lon})$ 412) nicht signifikant ändern. Es kann somit ein Nahbereich 414 von möglichen Trajektorienkandidaten in der direkten Umgebung der geplanten Trajektorie $x_{opt}(k)$ 403 für den Zeitpunkt $n$ ermittelt werden. Die Trajektorienkandidaten aus dem Nahbereich 414 der zuletzt geplanten Trajektorie $x_{opt}(k)$ 403 können als Nahbereich-Trajektorienkandidaten bezeichnet werden. Der Nahbereich 414 wird in Fig. 4 durch zwei gestrichelte Kurven um die zuletzt geplanten Trajektorie $x_{opt}(k)$ 403 dargestellt. Die Nahbereich-Trajektorienkandidaten können mit einer relativ hohen bzw. feinen Auflösung der unterschiedlichen Zustandsgrößen $x_1, x_2, x_3, x_4$ ermittelt werden.

Es kann dann die Trajektorie aus den ermittelten Nahbereich-Trajektorienkandidaten ausgewählt werden, die die ein oder mehreren Nebenbedingungen erfüllt und dabei das Gütefunktional verbessert, insbesondere optimiert.

Auch wenn es relativ wahrscheinlich ist, dass die zu planende bzw. die zu aktualisierende Trajektorie 413 für den nachfolgenden Zeitpunkt $n + 1$ in unmittelbarer Nähe zu der bereits geplanten bzw. ermittelten Trajektorie 403 für den Zeitpunkt $n$ angeordnet ist, so kann nicht ausgeschlossen werden, dass sich (z.B. aufgrund einer abrupten Änderung der Situation im Umfeld des Fahrzeugs 100) die zu planende Trajektorie 413 für den nachfolgenden Zeitpunkt $n + 1$ außerhalb des Nahbereichs 414 befindet. Aus diesem Grund können ein oder mehrere Fernbereiche 415, 416 für Trajektorienkandidaten außerhalb des Nahbereichs 414 definiert werden. Die ein oder mehreren Fernbereiche 415, 416 sind in Fig. 4a durch eine gestrichelte Linie einerseits und eine Strich-Punkt-Linie andererseits begrenzt. In den ein oder mehreren Fernbereichen 415, 416 können mit einer relativ niedrigen Auflösung der unterschiedlichen Zustandsgrößen $x_1, x_2, x_3, x_4$ jeweils ein oder mehrere Fernbereich-Trajektorienkandidaten ermittelt werden.

Es kann dann überprüft werden, ob eine der Fernbereich-Trajektorienkandidaten, der auch die ein oder mehreren Nebenbedingungen erfüllt, einen besseren Wert des Gütefunktionals liefert als der (optimale) Nahbereich-Trajektorienkandidat. Es kann dann je nach Wert der Gütefunktionals entweder der Nahbereich-Trajektorienkandidat oder einer der Fernbereich-Trajektorienkandidaten als aktualisierte Trajektorie 413 für den nachfolgenden Zeitpunkt $n + 1$ ausgewählt werden. Die aktualisierte Trajektorie 413 ist in Fig. 4a durch eine gepunktete Linie dargestellt.

Durch die Verwendung einer relativ hohen bzw. feinen Auflösung nur im Nahbereich 414 der bisher geplanten Trajektorie 403 und durch die Verwendung einer relativ kleinen bzw. groben Auflösung außerhalb des Nahbereichs 414 kann der Rechenaufwand bei der Ermittlung einer Trajektorie 413 wesentlich reduziert werden.

Wenn an einem bestimmten Zeitpunkt n anstelle eines Nahbereich-Trajektorienkandidaten ein Fernbereich-Trajektorienkandidat als geplante Trajektorie 403 ausgewählt wurde, so stellt der Fernbereich-Trajektorienkandidat aufgrund der relativ kleinen bzw. groben Auflösung, die bei der Ermittlung des Fernbereich-Trajektorienkandidaten verwendet wurde, ggf. nicht die optimale Trajektorie in der Werteumgebung des ermittelten Fernbereich-Trajektorienkandidaten dar. Aufgrund der Tatsache, dass bei Ausführung des Verfahrens an dem nachfolgenden Zeitpunkt $n + 2$ Nahbereich-Trajektorienkandidaten in der direkten Werteumgebung der geplanten Trajektorie 403 mit einer relativ hohen bzw. feinen Auflösung ermittelt werden, kann aber gewährleistet werden, dass an dem nachfolgenden Zeitpunkt $n + 2$ eine optimale Trajektorie gefunden werden kann. Das Auffinden einer optimalen Trajektorie wird somit auf mehrere Zeitschritte des Verfahrens verteilt. Es wird somit ein Auffinden einer optimalen Trajektorie über mehrere Rechen- bzw. Zeitschritte hinweg ermöglicht, und dabei die Laufzeit bzw. die Rechenzeit für die Ermittlung der Trajektorie reduziert. Mit anderen Worten, durch die Abkehr vom Auffinden einer optimalen Lösung an jedem Zeitpunkt $n$ kann der Rechenaufwand der Trajektorienplanung signifikant reduziert werden, ohne dass dadurch die Qualität der Trajektorienplanung wesentlich beeinträchtigt wird (da das Auffinden einer optimalen Trajektorie nur um maximal einen Zeitschritt verschoben wird).

Wie bereits oben dargelegt, kann im Rahmen der Planung einer Trajektorie 403, 413 an einem Zeitpunkt $n$ eine Vorgabe in Bezug auf den Zielzustand $x(N_{lon})$ 402, 412 gemacht werden. Dabei wird durch das Festlegen eines festen Zielzustands $x(N_{lon})$ 402, 412 der Lösungsraum von möglichen Trajektorienkandidaten eingeschränkt. Ggf. kann die Vorgabe eines festen Zielzustands $x(N_{lon})$ 402, 412 für eine bestimmte Fahrfunktion bzw. für ein bestimmtes Fahrerassistenzsystem nicht erforderlich sein. Beispielsweise kann es ggf. möglich sein, einen bestimmten Toleranzbereich 422 um einen gewünschten Zielzustand $x(N_{lon})$ 412 zu ermöglichen (siehe Fig. 4b). Durch das Zulassen eines Toleranzbereichs 422 um einen gewünschten Zielzustand $x(N_{lon})$ 412 kann der Lösungsraum 424 von Trajektorienkandidaten erweitert werden, wodurch es ermöglicht wird, Trajektorien 413 zu planen, die einen verbesserten Wert des Gütefunktionals aufweisen, und somit eine höhere "Optimalität" aufweisen.

Mit anderen Worten, die Anzahl und/oder die Genauigkeit von Zielpunktvorgaben kann reduziert werden und zumindest teilweise durch weiche Vorgaben bzw. Toleranzbereiche 412 ersetzt werden. So kann der Lösungsraum 424 erweitert werden, um das iterative Auffinden einer optimale Trajektorie 413 zu verbessern.

Fig. 5 zeigt ein Ablaufdiagramm eines beispielhaften Verfahrens 500 zur Ermittlung einer aktualisierten Trajektorie 413 an einem bestimmten Zeitpunkt (z.B. an dem Zeitpunkt $n + 1$) für die Längs- und/oder Querführung eines Fahrzeugs 100. Dabei zeigt eine Trajektorie 403, 413 einen zeitlichen Verlauf von ein oder mehreren Zustandsgrößen des Fahrzeugs 100 von einem Anfangszustand 401, 411 bis zu einem Endzustand 402, 412 an. Beispielhafte Zustandsgrößen sind die Position, die Geschwindigkeit, die Beschleunigung und/oder der Ruck des Fahrzeugs 100.

Das Verfahren 500 umfasst das Ermitteln 501 von Nahbereich-Trajektorienkandidaten in einer direkten Umgebung bzw. in einem Nahbereich 414 einer an einem vorhergehenden Zeitpunkt (z.B. an dem Zeitpunkt n) ermittelten Trajektorie 403. Dabei werden die Nahbereich-Trajektorienkandidaten mit einer relativ feinen Werteauflösung der ein oder mehreren Zustandsgrößen ermittelt.

Ferner umfasst das Verfahren 500 das Ermitteln 502 von zumindest einem Fernbereich-Trajektorienkandidaten außerhalb der direkten Umgebung 414 (d.h. außerhalb des Nahbereichs 414) der an dem vorhergehenden Zeitpunkt ermittelten Trajektorie 403. Dabei wird der zumindest eine Fernbereich-Trajektorienkandidat mit einer relativ groben Werteauflösung der ein oder mehreren Zustandsgrößen ermittelt (z.B. mit einer um den Faktor 2, 3, 4 oder mehr gröberen Werteauflösung).

Die aktualisierte Trajektorie 413 an dem bestimmten Zeitpunkt kann dann auf Basis der ermittelten Nahbereich-Trajektorienkandidaten und auf Basis des ermittelten Fernbereich-Trajektorienkandidaten ermittelt 503 werden. Insbesondere kann einer der ermittelten Trajektorienkandidaten als aktualisierte Trajektorie 413 ausgewählt werden. Es kann z.B. der Trajektorienkandidat ausgewählt werden, der den Wert eines Gütefunktionals verbessert bzw. optimiert (und dabei dennoch ein oder mehrere Nebenbedingungen in Bezug auf ein oder mehrere Hindernisse 102, 103 erfüllt).

Durch die in diesem Dokument beschriebenen Maßnahmen können die Anzahl von möglichen Trajektorienkandidaten und somit die erforderliche Laufzeit zur Berechnung einer Trajektorie 413 auf einem Steuergerät eines Fahrzeugs 100 reduziert werden, ohne dabei die Güte der ermittelten Trajektorie 413 zu beeinträchtigen.

Die vorliegende Erfindung ist nicht auf die gezeigten Ausführungsbeispiele beschränkt.

**Patentansprüche**

1. Verfahren (500) zur Ermittlung einer aktualisierten Trajektorie (413) an einem bestimmten Zeitpunkt für die Längs- und/oder Querführung eines Fahrzeugs (100); wobei eine Trajektorie (403, 413) einen zeitlichen Verlauf von ein oder mehreren Zustandsgrößen des Fahrzeugs (100) von einem Anfangszustand (401, 411) bis zu einem Endzustand (402, 412) anzeigt; wobei das Verfahren (500) umfasst,

- Ermitteln (501) von Nahbereich-Trajektorienkandidaten in einer direkten Umgebung (414) einer an einem vorhergehenden Zeitpunkt ermittelten Trajektorie (403); wobei die Nahbereich-Trajektorienkandidaten mit einer relativ feinen Werteauflösung der ein oder mehreren Zustandsgrößen ermittelt werden;
- Ermitteln (502) von zumindest einem Fernbereich-Trajektorienkandidaten außerhalb der direkten Umgebung (414) der an dem vorhergehenden Zeitpunkt ermittelten Trajektorie (403); wobei der Fernbereich-Trajektorienkandidat mit einer relativ groben Werteauflösung der ein oder mehreren Zustandsgrößen ermittelt wird; und
- Ermitteln (503) der aktualisierten Trajektorie (413) an dem bestimmten Zeitpunkt auf Basis der ermittelten Nahbereich-Trajektorienkandidaten und auf Basis des ermittelten Fernbereich-Trajektorienkandidaten.

2. Verfahren (500) gemäß Anspruch 1, wobei das Verfahren (500) umfasst,

- Ermitteln eines Abstandswertes eines Abstandsmaßes zwischen einem Endzustand (412) für die aktualisierte Trajektorie (413) und einem Endzustand (402) für die an dem vorhergehenden Zeitpunkt ermittelten Trajektorie (403); und
- Ermitteln (501) von Nahbereich-Trajektorienkandidaten und/oder Ermitteln (502) von zumindest einem Fernbereich-Trajektorienkandidaten in Abhängigkeit von dem Abstandswert.

3. Verfahren (500) gemäß Anspruch 2, wobei

- die direkte Umgebung (414), insbesondere eine Größe der direkten Umgebung (414), der an dem vorhergehenden Zeitpunkt ermittelten Trajektorie (403) von dem Abstandswert abhängt, insbesondere mit steigendem Abstandswert vergrößert wird; und/oder
- das Ermitteln (501) von Nahbereich-Trajektorienkandidaten und das Ermitteln (502) von zumindest einem Fernbereich-Trajektorienkandidaten mit unterschiedlich feinen Werteauflösungen nicht erfolgt, wenn der Abstandswert größer als ein Abstands-Schwellenwert ist, und/oder nur dann erfolgt, wenn der Abstandswert kleiner als der Abstands-Schwellenwert ist.

4. Verfahren (500) gemäß einem der vorhergehenden Ansprüche, wobei

- die aktualisierte Trajektorie (413) Teil eines Gesamt-Lösungsraums von Trajektorienkandidaten ist;
- die direkte Umgebung (414) der an dem vorhergehenden Zeitpunkt ermittelten Trajektorie (403) einen Teil-Lösungsraum von Nahbereich-Trajektorienkandidaten darstellt; und
- die direkte Umgebung (414) der an dem vorhergehenden Zeitpunkt ermittelten Trajektorie (403) derart ist, dass der Teil-Lösungsraum von Nahbereich-Trajektorienkandidaten 20%, 10% oder weniger des Gesamt-Lösungsraums von Trajektorienkandidaten umfasst.

5. Verfahren (500) gemäß einem der vorhergehenden Ansprüche, wobei die Werteauflösung für das Ermitteln (502) des Fernbereich-Trajektorienkandidaten 2, 3, 4, 5, 10 mal oder mehr gröber als die Werteauflösung für das Ermitteln (501) der Nahbereich-Trajektorienkandidaten ist.

6. Verfahren (500) gemäß einem der vorhergehenden Ansprüche, wobei

- das Verfahren (500) für eine Sequenz von Zeitpunkten, insbesondere für eine Sequenz von äquidistanten Zeitpunkten, wiederholt wird; und
- der vorhergehende Zeitpunkt ein direkt vor dem bestimmten Zeitpunkt liegender Zeitpunkt der Sequenz von Zeitpunkten ist.

7. Verfahren (500) gemäß einem der vorhergehenden Ansprüche, wobei

- das Verfahren (500) umfasst, Ermitteln eines Toleranzbereichs (422) um einen vorgegebenen Endzustand (412) der aktualisierten Trajektorie (413); und
- die Nahbereich-Trajektorienkandidaten und/oder der Fernbereich-Trajektorienkandidat unter Berücksichtigung des Toleranzbereichs (422) um den vorgegebenen Endzustand (412) ermittelt werden.

8. Verfahren (500) gemäß einem der vorhergehenden Ansprüche, wobei das Ermitteln eines Trajektorienkandidaten umfasst,

- Ermitteln (201) des Anfangszustands (411) der aktualisierten Trajektorie (413); wobei der Anfangszustand (411) Anfangswerte für eine Vielzahl von Zustandsgrößen des Fahrzeugs (100) umfasst; wobei die Vielzahl von Zustandsgrößen eine Position ($x_1(k)$) des Fahrzeugs (100), eine Geschwindigkeit ($\dot{x}_1(k)$) des Fahrzeugs (100), eine Beschleunigung ($\ddot{x}_1(k)$) des Fahrzeugs (100) und/oder einen Ruck ( $x_1^{(3)}(k)$ ) des Fahrzeugs (100) umfasst;

- Ermitteln (202) des Endzustands (412) der aktualisierten Trajektorie (413); wobei der Endzustand (412) Endwerte für ein oder mehrere der Vielzahl von Zustandsgrößen des Fahrzeugs (100) umfasst; und

- Bestimmen (203), als Trajektorienkandidaten, einer zeitlichen Sequenz von Werten der Vielzahl von Zustandsgrößen, die den Anfangszustand (411) in den Endzustand (412) überführt; wobei die zeitliche Sequenz von Werten der Vielzahl von Zustandsgrößen in Abhängigkeit von einem Zustandsmodell des Fahrzeugs (100) ermittelt wird.

9. Verfahren (500) gemäß einem der vorhergehenden Ansprüche, wobei das Ermitteln (503) der aktualisierten Trajektorie (413) umfasst, Auswählen eines Trajektorienkandidaten aus den ermittelten Nahbereich-Trajektorienkandidaten und dem ermittelten zumindest einen Fernbereich-Trajektorienkandidaten, so dass

- ein oder mehrere Nebenbedingungen in Bezug auf zumindest ein Hindernis (102, 103) in einem Umfeld des Fahrzeugs (100) erfüllt werden; und/oder
- ein Wert eines Gütefunktionals verbessert, insbesondere optimiert, wird; wobei das Gütefunktional insbesondere von einem Fahrkomfort eines Trajektorienkandidaten abhängt.

10. Verfahren (500) gemäß einem der vorhergehenden Ansprüche, wobei das Verfahren (500) umfasst, Bestimmen einer Lenkvorgabe für eine Hilfskraftlenkung des Fahrzeugs (100) und/oder einer Verzögerungsvorgabe für eine Bremsanlage des Fahrzeugs (100) und/oder einer Beschleunigungsvorgabe für einen Antrieb des Fahrzeugs (100) in Abhängigkeit von der aktualisierten Trajektorie (413).

11. Vorrichtung, die eingerichtet ist, ein Verfahren gemäß einem der vorhergehenden Ansprüche auszuführen.

12. Straßenkraftfahrzeug, das eine Vorrichtung gemäß Anspruch 11 umfasst.

13. Software-Programm, das eingerichtet ist, um auf einem Prozessor ausgeführt zu werden, und um dadurch Verfahren gemäß einem der Ansprüche 1 bis 10 auszuführen.

14. Speichermedium, umfassend ein Software-Programm gemäß Anspruch 13.


**Claims**

1. A method (500) for determining an updated trajectory (413) at a specific time for the longitudinal and/or lateral guidance of a vehicle (100); wherein a trajectory (403, 413) indicates a temporal progression of one or more state variables of the vehicle (100) from an initial state (401, 411) to a final state (402, 412); wherein the method (500) comprises:

• Determining (501) near-range trajectory candidates in a direct vicinity (414) of a trajectory (403) determined at a previous time; wherein the near-range trajectory candidates are determined with a relatively fine value resolution of the one or more state variables;
• Determining (502) at least one far-range trajectory candidate outside the direct vicinity (414) of the trajectory (403) determined at the previous time; wherein the far-range trajectory candidate is determined with a relatively coarse value resolution of the one or more state variables; and
• Determining (503) the updated trajectory (413) at the specific time based on the determined near-range trajectory candidates and based on the determined far-range trajectory candidate.

2. Method (500) according to claim 1, wherein the method (500) comprises:

• Determining a distance value of a distance measure between a final state (412) for the updated trajectory (413) and a final state (402) for the trajectory (403) determined at the previous time; and

• Determining (501) near-range trajectory candidates and/or determining (502) at least one far-range trajectory candidate depending on the distance value.

3. Method (500) according to claim 2, wherein

• the direct vicinity (414), in particular a size of the direct vicinity (414), of the trajectory (403) determined at the previous time depends on the distance value, in particular is enlarged with increasing distance value; and/or
• the determining (501) of near-range trajectory candidates and the determining (502) of at least one far-range trajectory candidate with different fine value resolutions does not occur if the distance value is greater than a distance threshold value, and/or only occurs if the distance value is less than the distance threshold value.

4. Method (500) according to any of the preceding claims, wherein

• the updated trajectory (413) is part of a total solution space of trajectory candidates;
• the direct vicinity (414) of the trajectory (403) determined at the previous time represents a partial solution space of near-range trajectory candidates; and
• the direct vicinity (414) of the trajectory (403) determined at the previous time is such that the partial solution space of near-range trajectory candidates comprises 20%, 10% or less of the total solution space of trajectory candidates.

5. Method (500) according to any of the preceding claims, wherein the value resolution for determining (502) the far-range trajectory candidate is 2, 3, 4, 5, 10 times or more coarser than the value resolution for determining (501) the near-range trajectory candidates.

6. Method (500) according to any of the preceding claims, wherein

• the method (500) is repeated for a sequence of times, in particular for a sequence of equidistant times; and
• the previous time is a time of the sequence of times directly preceding the specific time.

7. Method (500) according to any of the preceding claims, wherein

• the method (500) comprises determining a tolerance range (422) around a specified final state (412) of the updated trajectory (413); and
• the near-range trajectory candidates and/or the far-range trajectory candidate are determined taking into account the tolerance range (422) around the specified final state (412).

8. Method (500) according to any of the preceding claims, wherein determining a trajectory candidate comprises:

• Determining (201) the initial state (411) of the updated trajectory (413); wherein the initial state (411) comprises initial values for a plurality of state variables of the vehicle (100); wherein the plurality of state variables comprises a position ($x_1(k)$) of the vehicle (100), a velocity ($\dot{x}_1(k)$) of the vehicle (100), an acceleration ($\ddot{x}_1(k)$) of the vehicle (100) and/or a jerk ($x_1^{(3)}(k)$) of the vehicle (100);
• Determining (202) the final state (412) of the updated trajectory (413); wherein the final state (412) comprises final values for one or more of the plurality of state variables of the vehicle (100); and
• Determining (203), as a trajectory candidate, a temporal sequence of values of the plurality of state variables that transitions the initial state (411) to the final state (412); wherein the temporal sequence of values of the plurality of state variables is determined depending on a state model of the vehicle (100).

9. Method (500) according to any of the preceding claims, wherein determining (503) the updated trajectory (413) comprises selecting a trajectory candidate from the determined near-range trajectory candidates and the determined at least one far-range trajectory candidate, such that

• one or more constraints with respect to at least one obstacle (102, 103) in an environment of the vehicle (100) are satisfied; and/or
• a value of a quality functional is improved, in particular optimized; wherein the quality functional depends in particular on a driving comfort of a trajectory candidate.

10. Method (500) according to any of the preceding claims, wherein the method (500) comprises determining a steering specification for a power steering system of the vehicle (100) and/or a deceleration specification for a braking system of the vehicle (100) and/or an acceleration specification for a drive of the vehicle (100) depending on the updated trajectory (413).

11. Device configured to carry out a method according to any of the preceding claims.

12. Road motor vehicle comprising a device according to claim 11.

13. Software program configured to be executed on a processor, and to thereby carry out a method according to any of claims 1 to 10.

14. Storage medium comprising a software program according to claim 13.

**Revendications**

1. Procédé (500) pour déterminer une trajectoire actualisée (413) à un moment spécifique pour le guidage longitudinal et/ou latéral d'un véhicule (100) ; dans lequel une trajectoire (403, 413) indique une progression temporelle d'une ou plusieurs variables d'état du véhicule (100) d'un état initial (401, 411) à un état final (402, 412) ; le procédé (500) comprenant :

   • Déterminer (501) des candidats de trajectoire de proximité dans un voisinage direct (414) d'une trajectoire (403) déterminée à un moment précédent ; les candidats de trajectoire de proximité étant déterminés avec une résolution de valeur relativement fine de la ou des variables d'état ;
   • Déterminer (502) au moins un candidat de trajectoire à longue portée en dehors du voisinage direct (414) de la trajectoire (403) déterminée au moment précédent ; le candidat de trajectoire à longue portée étant déterminé avec une résolution de valeur relativement grossière de la ou des variables d'état ; et
   • Déterminer (503) la trajectoire actualisée (413) au moment spécifique sur la base des candidats de trajectoire de proximité déterminés et sur la base du candidat de trajectoire à longue portée déterminé.

2. Procédé (500) selon la revendication 1, dans lequel le procédé (500) comprend :

   • Déterminer une valeur de distance d'une mesure de distance entre un état final (412) pour la trajectoire actualisée (413) et un état final (402) pour la trajectoire (403) déterminée au moment précédent ; et
   • Déterminer (501) des candidats de trajectoire de proximité et/ou déterminer (502) au moins un candidat de trajectoire à longue portée en fonction de la valeur de distance.

3. Procédé (500) selon la revendication 2, dans lequel

   • le voisinage direct (414), en particulier une taille du voisinage direct (414), de la trajectoire (403) déterminée au moment précédent dépend de la valeur de distance, en particulier est agrandi avec une valeur de distance croissante ; et/ou
   • la détermination (501) des candidats de trajectoire de proximité et la détermination (502) d'au moins un candidat de trajectoire à longue portée avec différentes résolutions de valeur fines ne se produisent pas si la valeur de distance est supérieure à une valeur seuil de distance, et/ou ne se produisent que si la valeur de distance est inférieure à la valeur seuil de distance.

4. Procédé (500) selon l'une quelconque des revendications précédentes, dans lequel

   • la trajectoire actualisée (413) fait partie d'un espace de solution total de candidats de trajectoire ;
   • le voisinage direct (414) de la trajectoire (403) déterminée au moment précédent représente un espace de solution partiel de candidats de trajectoire de proximité ; et
   • le voisinage direct (414) de la trajectoire (403) déterminée au moment précédent est tel que l'espace de solution partiel des candidats de trajectoire de proximité comprend 20%, 10% ou moins de l'espace de solution total des candidats de trajectoire.

5. Procédé (500) selon l'une quelconque des revendications précédentes, dans lequel la résolution de valeur pour déterminer (502) le candidat de trajectoire à longue portée est 2, 3, 4, 5, 10 fois ou plus grossière que la résolution de valeur pour déterminer (501) les candidats de trajectoire de proximité.

6. Procédé (500) selon l'une quelconque des revendications précédentes, dans lequel

• le procédé (500) est répété pour une séquence de moments, en particulier pour une séquence de moments équidistants ; et
• le moment précédent est un moment de la séquence de moments directement précédant le moment spécifique.

7. Procédé (500) selon l'une quelconque des revendications précédentes, dans lequel

• le procédé (500) comprend la détermination d'une plage de tolérance (422) autour d'un état final spécifié (412) de la trajectoire actualisée (413) ; et
• les candidats de trajectoire de proximité et/ou le candidat de trajectoire à longue portée sont déterminés en tenant compte de la plage de tolérance (422) autour de l'état final spécifié (412).

8. Procédé (500) selon l'une quelconque des revendications précédentes, dans lequel la détermination d'un candidat de trajectoire comprend :

• Déterminer (201) l'état initial (411) de la trajectoire actualisée (413) ; l'état initial (411) comprenant des valeurs initiales pour une pluralité de variables d'état du véhicule (100) ; la pluralité de variables d'état comprenant une position ($x_1(k)$) du véhicule (100), une vitesse ($\dot{x}_1(k)$) du véhicule (100), une accélération ($\ddot{x}_1(k)$) du véhicule (100) et/ou un jerk ($x_1^{(3)}(k)$) du véhicule (100) ;
• Déterminer (202) l'état final (412) de la trajectoire actualisée (413) ; l'état final (412) comprenant des valeurs finales pour une ou plusieurs de la pluralité de variables d'état du véhicule (100) ; et
• Déterminer (203), en tant que candidat de trajectoire, une séquence temporelle de valeurs de la pluralité de variables d'état qui fait passer l'état initial (411) à l'état final (412) ; la séquence temporelle de valeurs de la pluralité de variables d'état étant déterminée en fonction d'un modèle d'état du véhicule (100).

9. Procédé (500) selon l'une quelconque des revendications précédentes, dans lequel la détermination (503) de la trajectoire actualisée (413) comprend la sélection d'un candidat de trajectoire parmi les candidats de trajectoire de proximité déterminés et le au moins un candidat de trajectoire à longue portée déterminé, de sorte que

• une ou plusieurs contraintes par rapport à au moins un obstacle (102, 103) dans un environnement du véhicule (100) sont satisfaites ; et/ou
• une valeur d'une fonctionnelle de qualité est améliorée, en particulier optimisée ; la fonctionnelle de qualité dépendant en particulier d'un confort de conduite d'un candidat de trajectoire.

10. Procédé (500) selon l'une quelconque des revendications précédentes, dans lequel le procédé (500) comprend la détermination d'une spécification de direction pour un système de direction assistée du véhicule (100) et/ou une spécification de décélération pour un système de freinage du véhicule (100) et/ou une spécification d'accélération pour un entraînement du véhicule (100) en fonction de la trajectoire actualisée (413).

11. Dispositif configuré pour mettre en œuvre un procédé selon l'une quelconque des revendications précédentes.

12. Véhicule automobile routier comprenant un dispositif selon la revendication 11.

13. Programme logiciel configuré pour être exécuté sur un processeur, et pour mettre ainsi en œuvre un procédé selon l'une quelconque des revendications 1 à 10.

14. Support de stockage comprenant un programme logiciel selon la revendication 13.

105

112

103

102

100

101

**Fig. 1**

200

| Ermitteln von einem Anfangszustand des Fahrzeugs | 201 |

↓

| Ermitteln von einem Endzustand des Fahrzeugs | 202 |

↓

| Bestimmen einer Trajektorie bzw. eines Trajektorienkandidaten | 203 |

**Fig. 2**

**Fig. 3**

**Fig. 4a**

424

422

412

411

**Fig. 4b**

500

Ermitteln von Nahbereich-Trajektorienkandidaten in einer direkten Umgebung der zuvor geplanten Trajektorie

501

Ermitteln von Fernbereich-Trajektorienkandidaten außerhalb der direkten Umgebung der zuvor geplanten Trajektorie

502

Ermitteln einer aktualisierten Trajektorie auf Basis der Nahbereich- und der Fernbereich-Trajektorienkandidaten

503

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014223000 A1
- DE 102016009760 A1
- DE 102014215244 A1